(19) Europäisches Patentamt
European Patent Office
Office européen des brevets

(11) Veröffentlichungsnummer: **0 605 808 B1**

# (12) EUROPÄISCHE PATENTSCHRIFT

(45) Veröffentlichungstag der Patentschrift: **03.05.95**

(21) Anmeldenummer: **93119860.0**

(22) Anmeldetag: **09.12.93**

(51) Int. Cl.⁶: **C04B 28/00**, C04B 24/42, B09B 1/00, E02D 31/00, //(C04B28/00,14:02,14:10,24:42)

## (54) Schadstoffundurchlässige, organopolysiloxanhaltige Baustoffmischung.

(30) Priorität: **10.12.92 DE 4241714**

(43) Veröffentlichungstag der Anmeldung: **13.07.94 Patentblatt 94/28**

(45) Bekanntmachung des Hinweises auf die Patenterteilung: **03.05.95 Patentblatt 95/18**

(84) Benannte Vertragsstaaten: **AT BE CH DE ES FR GB IT LI NL SE**

(56) Entgegenhaltungen:
**EP-A- 0 139 838**
**EP-A- 0 242 798**
**WO-A-83/01204**
**DE-B- 1 201 225**
**GB-A- 2 162 223**

(73) Patentinhaber: **Wacker-Chemie GmbH**
**Hanns-Seidel-Platz 4**
**D-81737 München (DE)**

(72) Erfinder: **Gerhardinger, Dieter**
**In den Grüben 125**
**D-84489 Burghausen (DE)**
Erfinder: **Mittermeier, Johann**
**Konventstrasse 9**
**D-84503 Altötting (DE)**
Erfinder: **Felix, Karl-Heinz**
**Einfeldstrasse 9**
**D-84367 Reut (DE)**

**EP 0 605 808 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft schadstoffresistente Massen enthaltend Organopolysiloxane. Sie werden zur Herstellung von Dichtwänden und ähnlichen in das Erdreich eingebrachten Bodenabdichtungen eingesetzt.

Zur Isolierung von Schadstoffen in Bodenschichten ist aus EP-B-121 808 ein Verfahren bekannt, bei welchem ein gelbildendes Gemisch auf Alkalimetallsilikatbasis, welches mindestens ein Alkyltrialkoxysilan enthält in den Boden injiziert wird.

Aus EP-A-139 838 sind schadstoffresistente Massen bekannt, die neben quellfähigen Tonmineralien, hydraulischen Bindemitteln, Füllstoffen und Wasser einen zusätzlichen Gehalt an Alkalialuminaten und an Trialkoxysilanen der Formel $R\text{-}Si(OR')_3$ oder deren Hydrolyseprodukten haben, wobei R ein aliphatischer Rest mit 2 bis 6 C-Atomen und R' gleiche oder verschiedene Alkylreste mit 1 bis 4 C-Atomen bedeuten.

Gegenstand der Erfindung ist eine schadstoffresistente organopolysiloxanhaltige Masse zur Herstellung von Dichtwänden, Deponieauskleidungen und ähnlichen insbesondere im Erdreich angelegten Abdichtungen, dadurch gekennzeichnet, daß sie

(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,

(B) Organosiliciumverbindung mit basischem Stickstoff in Mengen von 0 bis 0,5 Gewichtsprozent, bezogen auf das Gewicht dieser Organosiliciumverbindung,

(C) quellfähige Tonmineralien und

(D) hydraulisches Bindemittel,

enthält.

Die Komponente (A) ist als Bestandteil von Emülsionen auf Basis von Organopolysiloxan bekannt, die als hydrophobierende Zusätze für z.B. Mörtel verwendet werden (vgl. EP-A-242798).

Der Begriff "basischer Stickstoff", wie er im Rahmen dieser Erfindung mit Mengenangaben gebraucht wird, bezieht sich auf Stickstoff, berechnet als Element.

Die Organopolysiloxane, durch deren Umsetzung mit organischer oder anorganischer Säure Bestandteil (A) der erfindungsgemäßen Masse erhältlich ist, sind vorzugsweise solche aüs Eiheiten der Formel

$$R_aR^1_b(OR^2)_cSiO_{\frac{4-a-b-c}{2}} \qquad (I),$$

worin

R gleich oder verschieden sein kann und Wasserstoff oder einwertige, von basischem Stickstoff freie, SiC-gebundene organische Reste bedeutet,

$R^1$ gleich oder verschieden sein kann und einwertige, SiC-gebundene Reste mit basischem Stickstoff bedeutet,

$R^2$ gleich oder verschieden sein kann und Wasserstoffatom oder einwertige organische Reste bedeutet,

a 0, 1, 2 oder 3,

b 0, 1, 2 oder 3 und

c 0, 1, 2 oder 3 ist,

mit der Maßgabe, daß c durchschnittlich mindestens 0,1 ist und die Summe aus a, b und c kleiner oder gleich 3 ist und der Rest $R^1$ in Mengen von mehr als 0,5 Gewichtsprozent basischem Stickstoff pro Organopolysiloxanmolekül vorhanden ist.

Bevorzugt handelt es sich bei Rest R um gegebenenfalls substituierte Kohlenwasserstoffreste mit 1 bis 20 Kohlenstoffatomen. Vorzugsweise ist an jedes Siliciumatom, an das ein Wasserstoffatom gebunden ist, auch ein Kohlenwasserstoffrest, insbesondere ein Methylrest, gebunden.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und

Anthryl- und Phenanthrylrest; Alkarylreste, wie o-, m-, p-Tolylreste, Xylylreste und Ethylphenylreste; Aralkylreste, wie der Benzylrest, der alpha- und der $\beta$-Phenylethylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Acyloxyalkylreste, wie der 3-Acryloxypropyl- und 3-Methacryloxypropylrest; Hydroxyalkylreste, wie der Hydroxypropylrest und Reste der Formel

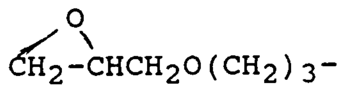

und $HOCH_2CH(OH)CH_2SCH_2CH_2$-.

Bevorzugt handelt es sich bei Rest $R^1$ um solche der Formel

$R^3{}_2NR^4$- (II)

worin $R^3$ gleich oder verschieden sein kann und Wasserstoff oder einwertiger, gegebenenfalls substituierter Kohlenwasserstoffrest bedeutet und $R^4$ zweiwertiger Kohlenwasserstoffrest bedeutet.

Beispiele für Rest $R^3$ sind die für Rest R gegebenen Beispiele für Kohlenwasserstoffreste sowie mit Aminogruppen substituierte Kohlenwasserstoffreste, wie Aminoalkylreste.

Vorzugsweise ist an jedes Stickstoffatom in den Resten der Formel (II) mindestens ein Wasserstoffatom gebunden.

Bevorzugt handelt es sich bei Rest $R^4$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^4$ sind der Methylen-, Ethylen-, Propylen-, Butylen-, Cyclohexylen-, Octadecylen-, Phenylen- und Butenylenrest.

Beispiele für Reste $R^1$ sind
$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$-,
$(CH_3)_2N(CH_2)_2$-,
$(C_2H_5)_2N(CH_2)_3$- und
$(C_2H_5)_2N(CH_2)_2$-.

Die Beispiele für Alkylreste R gelten im vollen Umfang auch für den Rest $R^2$.

Vorzugsweise haben die Organopolysiloxane aus Einheiten der Formel (I) eine Viskosität von 15 bis 2500 mPa•s, besonders bevorzugt 20 bis 800 mPa•s.

Organopolysiloxane aus Einheiten der Formel (I) können in bekannter Weise, beispielsweise durch Äquilibrieren bzw. Kondensieren von aminofunktionellen Silanen mit Organopolysiloxanen, die frei von basischem Stickstoff sind, hergestellt werden.

Die organischen oder anorganischen Säuren, die zur Herstellung von Bestandteil (A) der erfindungsgemäßen Masse verwendet werden, können die gleichen sein, die auch bisher zur Herstellung von Salzen von organischer oder anorganischer Säure und Organopolysiloxan mit basischen Stickstoff aufweisenden, SiC-gebundenen Resten eingesetzt werden konnten. Beispiele für derartige Säuren sind HCl, $H_2SO_4$, Essigsäu-

re, Propionsäure, Diethylhydrogenphosphat, wobei Propionsäure und Essigsäure bevorzugt und Essigsäure besonders bevorzugt sind.

Verbindungen, die als Komponente (A) in der erfindungsgemäßen Masse eingesetzt werden können, sind bereits bekannt. Hierzu sei beispielsweise auf EP 68 671 A2 und US 4,661,551 sowie auf US 3,890,269 (Stauffer Chemical Company; ausgegeben am 17. Juni 1975), US 3,355,424 (Dow Corning Corp.) und US 4,247,330 (SWS Silicones Corp.; ausgegeben am 27. Januar 1981), verwiesen.

Bei dem als Komponente (A) eingesetzten Organopolysiloxansalz kann es sich um eine einzelne Art dieses Salzes wie auch um ein Gemisch aus mindestens zwei Arten eines solchen Salzes handeln.

Die erfindungsgemäße Masse enthält vorzugsweise 0,01 bis 5 Gewichtsprozent, besonders bevorzugt 0,1 bis 0,5 Gewichtsprozent der Komponente (A), jeweils bezogen auf das Gesamtgewicht der erfindungsgemäßen Masse.

Bei den Organosiliciumverbindung (B) handelt es sich beispielsweise um Tetraalkoxysilane, wie Tetraethylsilikat, Organoalkoxysilane bzw. Organoalkoxyalkylenoxysilane, wie Dimethyldimethoxysilan, Methyltrimethoxysilan, Phenyltrimethoxysilan, Vinyltrimethoxysilan, n-Octyltrimethoxysilan Isooctyltrimethoxysilan, 2-Ethylhexyltrimethoxysilan, Methyltris-(methoxyethylenoxy)-silan, Dimethyldiethoxysilan und n-Octadecyltrimethoxysilan, Siloxane mit 2 bis 10 Siloxaneinheiten je Molekül, wie Hexamethyldisiloxan, 1,1,3,3-Tetramethoxy -1,3-dimethyldisiloxan und 1,1,3,3-Tetramethyl-1,3-divinyldisiloxan, alle die oben genannten Beispiele für von basischem Stickstoff freie Polysiloxane, und Siloxane der Formel

$$R^5_d(OR^6)_eSiO_{\frac{4-d-e}{2}} \qquad (III),$$

worin

$R^5$ gleich oder verschieden sein kann und Wasserstoff oder einwertige, SiC-gebundene organische Reste bedeutet,

$R^6$ gleich oder verschieden sein kann und Wasserstoffatom oder einwertige organische Reste bedeutet,

d 0, 1, 2, 3 oder 4 und

e 0, 1, 2, 3 oder 4 ist,

mit der Maßgabe, daß die Summe aus d und e kleiner oder gleich 4 ist und der Gehalt an basischem Stickstoff 0 bis 0,5 Gewichtsprozent, bezogen auf das Gewicht der jeweiligen Organosiliciumverbindung, beträgt.

Beispiele für Rest $R^5$ sind die für Rest R angegebenen Beispiele sowie mit Aminogruppen substituierte Kohlenwasserstoffreste.

Beispiele für Rest $R^6$ sind die für $R^2$ angegebenen Beispiele.

Bei der Organosiliciumverbindung aus Einheiten der Formel (III) kann es sich um Silane handeln, d.h. die Summe aus d und e ist gleich 4.

Bei den Organosiliciumverbindungen aus Einheiten der Formel (III) kann es sich auch um Organopolysiloxane handelt, d.h. die Summe aus d und e ist kleiner oder gleich 3.

Bevorzugte Beispiele für Silane der Formel (III) sind i-Octyltrimethoxysilan und i-Octyltriethoxysilan.

Die Organosiliciumverbindung (B) wird vorzugsweise in Mengen von 0,01 bis 10 Gewichtsprozent, besonders bevorzugt 0,2 bis 1,0 Gewichtsprozent, jeweils bezogen auf das Gesamtgewicht der erfindungsgemäßen Masse, eingesetzt.

Bei der Organosiliciumverbindung (B) kann es sich um eine Art wie auch um ein Gemisch aus mindestens zwei Arten einer derartigen Organosiliciumverbindung handeln.

Bei der Organosiliciumverbindung (B) handelt es sich besonders bevorzugt um Silane und niedermolekulare Siloxane, insbesondere um Silane.

Bei dem quellfähigen Tonmineral (C) handelt es sich vor allem um Silikate mit Schichtgitterstruktur, bei denen die Schichten durch das Eindringen von Wasser voneinander getrennt werden können. Als Beispiele für diese Mineralien seien Kaolinit, Attapulgit, die Bentonite Bentone SD-1, Hectorit und Montmorillonite genannt.

Die erfindungsgemäße Masse enthält vorzugsweise 0,1 bis 15 Gewichtsprozent der Komponente (C), besonders bevorzugt 1 bis 5 Gewichtsprozent, jeweils bezogen auf das Gesamtgewicht der erfindungsgemäßen Masse.

Bei dem erfindungsgemäß vorhandenen hydraulischen Bindemitteln (D) handelt es sich um mindestens ein anorganisches Bindemittel, das durch Hydratisierung abbindet, wie beispielsweise um hydraulische Mörtel oder Zemente nach DIN 1164 wie z.B. Hochofenzement oder Portlandzement.

Vorzugsweise enthält die erfindungsgemäße Masse hydraulische Bindemittel (D) in Mengen von 5 bis 30 Gewichtsprozent, besonders bevorzugt von 10 bis 20 Gewichtsprozent, jeweils bezogen auf das Gesamtgewicht der erfindungsgemäßen Masse.

In einer bevorzugten Ausführungsform enthalten die erfindungsgemäßen Massen neben den genannten Komponenten A bis D noch Betonzusatzmittel (E) und/oder Füllstoffe (F).

Die erfindungsgemäße Masse kann als weitere Komponente (E) Betonzusatzmittel wie z.B. Melmet F10 in Mengen bis 5 Gewichtsprozent, bevorzugt 0,1 bis 2 Gewichtsprozent, bezogen auf das Gesamtgewicht der erfindungsgemäßen Masse, enthalten.

Die erfindungsgemäße Masse kann als weitere Komponente (F) Füllstoffe wie Calziumcarbonat (Calzit), Sand und/oder Gesteinsmehle, z.B. Kalkstein, Dolomit, oder Quarzgestein in Mengen von bis zu 90 Gewichtsprozent, bevorzugt von 45 bis 85 Gewichtsprozent, jeweils bezogen auf das Gesamtgewicht der erfindungsgemäßen Masse, enthalten.

Die erfindungsgemäße Masse enthält vorzugsweise
0,01 bis 5 Gewichtsprozent Komponente (A),
0,01 bis 10 Gewichtsprozent Komponente (B)
0,1 bis 15 Gewichtsprozent Komponente (C),
5 bis 30 Gewichtsprozent Komponente (D),
0,1 bis 2 Gewichtsprozent Komponente (E), und
45 bis 85 Gewichtsprozent Komponente (F),
jeweils bezogen auf das Gesamtgewicht der erfindungsgemäßen Zusammensetzung.

Die erfindungsgemäße Masse läßt sich durch Vermischen von Organopolysiloxan aus Einheiten der Formel (I) mit organischer oder anorganischer Säure zur Bildung des Bestandteils (A) und mit den weiteren Bestandteilen (B) bis ggf.(F) herstellen. Vorzugsweise wird dieses Vermischen bei einer Temperatur von 20 °C und einem Druck von 900 bis 1100 hPa durchgeführt.

Die erfindungsgemäße Masse läßt sich in beliebigen Mengenverhältnissen mit Wasser zu stabilen Mischungen verdünnen. Vorzugsweise wird die erfindungsgemäße Masse mit Wasser in Mengen von 10 bis 50 Gewichtsprozent, besonders bevorzugt 15 bis 30 Gewichtsprozent, jeweils bezogen auf das Gesamtgewicht der erfindungsgemäßen Masse verdünnt.

Vorzugsweise wird die erfindungsgemäße Masse hergestellt indem man zunächst aus A und B, beispielsweise wie in EP B 186 847 beschrieben, eine Organopolysiloxan enthaltende Zusammensetzung herstellt, und diese dann mit den weiteren Komponenten und Wasser vermischt. Zusätzlich zu den genannten Komponenten kann die erfindungsgemäße Masse weitere jeweils erwünschte, für Baustoffe bekannte Komponenten enthalten.

Die Herstellung der erfindungsgemäßen Masse erfolgt dabei unter Verwendung der zur Herstellung von Dichtwandmassen üblichen Mischgeräte. Die zunächst aus A und B hergestellte, organopolysiloxanenthaltende Zusammensetzung wird während des Mischvorgangs den übrigen Komponenten zugesetzt, sie kann aber auch bereits mit einem Teil der Feststoffe vorgemischt werden. Der Wassergehalt wird dabei so eingestellt, daß eine zähflüssige geschmeidige Masse entsteht. Diese Masse läßt sich zur Herstellung von Dichtwänden und ähnlichen in das Erdreich eingebrachten Bodenabdichtungen verwenden. Sie weist eine verminderte Durchlässigkeit für Schadstoffe wie beispielsweise Kohlenwasserstoffe, halogenierte Kohlenwasserstoffe, Lösungsmittelgemische, Phenole, Benzin, Dieselkraftstoff oder verdünnten Säuren und Laugen auf.

Die erfindungsgemäße Masse eignet sich somit insbesondere zur Herstellung von Umschließungswänden zur als Makroeinkapselung bezeichneten Umschließung eines mit Schadstoff verschmutzten Bereichs. Dadurch wird das Austreten der Schadstoffe aus dem umschlossenen Bereich und ihr Eindringen in das Grundwasser weitgehender und länger als mittels bekannter Dichtwandmaterialien verhindert.

Fig. 1 zeigt den in den Beispielen verwendeten Versuchsaufbau zur Bestimmung der Schadstoffresistenz.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20 °C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25 °C beziehen.

Beispiel 1 (B1): Herstellung organopolysiloxanhaltiger Dichtmassen

In einem mit Rührer, Tropftrichter und Rückflußkühler ausgestattetem 1 l Dreihalskolben wurden unter Rühren zu einem Gemisch aus 0,2 g KOH in 4 g Methanol und 500 g eines in den endständigen Einheiten je eine Si-gebundene Hydroxylgruppe aufweisenden $\alpha,\omega$-Dihydroxymethylpolysiloxans mit einem durchschnittlichen Molekulargewicht von etwa 4000 g/Mol, 150 g N(-2-Aminoethyl)3-aminopropyltrimethoxysilan gegeben und das so erhaltene Gemisch 6 Stunden zum Sieden unter Rückfluß erwärmt, dann wurde auf 30 °C gekühlt und mit 2,5 ml 10%iger Salzsäure vermischt. Durch Erwärmen auf bis zu 140 °C wurde schließlich das Methanol abdestilliert und das so erhaltene Organopolysiloxan von KCl durch Filtrieren befreit. Das so erhaltene Organopolysiloxan enthielt 2,9% basischen Stickstoff.

40 g dieses Organopolysiloxans mit basischem Stickstoff wurden mit 5 g Eisessig, 80 g des Organopolysiloxans der Summenformel $CH_3Si(OC_2H_5)_{0,8}O_{1.1}$ und dem durchschnittlichen Molekulargewicht von 600 g/Mol und 10 g iso-Octyltrimethoxysilan kaltgemischt, wobei sich eine klare Mischung bildet.

a) 9 g dieser klaren Mischung wurden mit 420 g Wasser, 12 g MelmentF10, (erhältlich bei der SKW Trostberg AG, Trostberg), 24 g Hectorit, 900 g Quarzsand 0,1-0,4 (erhältlich bei der Amberger Kaolinwerke GmbH), 600 g Calcit, 300 g Hochofenzement HOZ 35L (erhältlich bei Südbayer. Portlandzementwerk) vermischt.

Das Mischen erfolgte in einem Dissolver (Pendraulik, Typ LD 50), die Mischzeit betrug 5 min bei einer Scheibendrehzahl von 1865 U/min.

b) 9 g der klaren Mischung aus Beispiel 1a wurden wie in Beispiel 1a beschrieben mit 420 g Wasser, 12 g Melment F10, 24 g Bentone SD1 (erhältlich bei der Kronos Titan GmbH), 900 g Quarzsand 0,1-0,4, 600 g Calcit und 300 g Hochofenzement HOZ35L vermischt.

c) 9 g der klaren Mischung aus Beispiel 1a wurden, wie in Beispiel 1a beschrieben, mit 420 g Wasser, 12 g Melment F10, 12 g Bentone SD1, 12 g Hectorit, 900 g Quarzsand 0,1-0,4, 600 g Calcit und 300 g Hochofenzement HOZ 35L vermischt.

Vergleichsbeispiel 1 (V1): Herstellung bekannter Dichtmassen

a) wie in Beispiel 1a beschrieben, wurden 420 g Wasser, 12 g MelmentF10, (erhältlich bei der SKW Trostberg AG, Trostberg), 24 g Hectorit, 900 g Quarzsand 0,1-0,4 (erhältlich bei der Amberger Kaolinwerke GmbH), 600 g Calcit, 300 g Hochofenzement HOZ 35L (erhältlich bei Südbayer. Portlandzementwerk) vermischt.

b) wie in Beispiel 1b beschrieben, wurden 420 g Wasser, 12 g Melment F10, 24 g Bentone SD1 (erhältlich bei der Kronos Titan GmbH), 900 g Quarzsand 0,1-0,4, 600 g Calcit und 300 g Hochofenzement HOZ35L vermischt.

c) wie in Beispiel 1c beschrieben, wurden 420 g Wasser, 12 g Melment F10, 12 g Bentone SD1, 12 g Hectorit, 900 g Quarzsand 0,1-0,4, 600 g Calcit und 300 g Hochofenzement HOZ 35L vermischt.

d) wie in Beispiel 1a beschrieben, wurden 420 g Wasser, 12 g MelmentF10, (erhältlich bei der SKW Trostberg AG, Trostberg), 24 g Hectorit, 900 g Quarzsand 0,1-0,4 (erhältlich bei der Amberger Kaolinwerke GmbH), 600 g Calcit, 300 g Hochofenzement HOZ 35L (erhältlich bei Südbayer. Portlandzementwerk) mit 9 g Propyltrimethoxysilan vermischt.

e) wie in Beispiel 1b beschrieben, wurden 420 g Wasser, 12 g Melment F10, 24 g Bentone SD1 (erhältlich bei der Kronos Titan GmbH), 900 g Quarzsand 0,1-0,4, 600 g Calcit und 300 g Hochofenzement HOZ35L mit 9 g Propyltrimethoxysilan vermischt.

f) wie in Beispiel 1c beschrieben, wurden 420 g Wasser, 12 g Melment F10, 12 g Bentone SD1, 12 g Hectorit, 900 g Quarzsand 0,1-0,4, 600 g Calcit und 300 g Hochofenzement HOZ 35L mit 9 g Propyltrimethoxysilan vermischt.

g) wie in Beispiel 1a beschrieben, wurden 420 g Wasser, 12 g MelmentF10, (erhältlich bei der SKW Trostberg AG, Trostberg), 24 g Hectorit, 900 g Quarzsand 0,1-0,4 (erhältlich bei der Amberger Kaolinwerke GmbH), 600 g Calcit, 300 g Hochofenzement HOZ 35L (erhältlich bei Südbayer. Portlandzementwerk) mit 9 g einer 50 %igen wässrigen Siloxan/Silan Emulsion, käuflich erhältlich unter der Bezeichnung BS 51 bei der Fa. Wacker-Chemie GmbH in München, vermischt.

h) wie in Beispiel 1a beschrieben, wurden 420 g Wasser, 12 g MelmentF10, (erhältlich bei der SFW Trostberg AG, Trostberg), 24 g Hectorit, 900 g Quarzsand 0,1-0,4 (erhältlich bei der Amberger Kaolinwerke GmbH), 600 g Calcit, 300 g Hochofenzement HOZ 35L (erhältlich bei Südbayer. Portlandzementwerk) mit 9 g einer 50 %igen wässrigen Methylharz Emulsion, käuflich erhältlich unter der Bezeichnung BS 96 bei der Fa. Wacker-Chemie GmbH in München, vermischt.

i) wie in Beispiel 1a beschrieben, wurden 420 g Wasser, 12 g MelmentF10, (erhältlich bei der SKW Trostberg AG, Trostberg), 24 g Hectorit, 900 g Quarzsand 0,1-0,4 (erhältlich bei der Amberger Kaolinwerke GmbH), 600 g Calcit, 300 g Hochofenzement HOZ 35L (erhältlich bei Südbayer. Portlandzementwerk) mit 9 g einer 45 %igen wässrigen Lösung von Propylsiliconat, käuflich erhältlich unter der Bezeichnung BS 20 bei der Fa. Wacker-Chemie GmbH in München, vermischt.

k) wie in Beispiel 1 beschrieben, wurde 420 g Wasser, 12 g MelmentF10, (erhältlich bei der SKW Trostberg AG, Trostberg), 24 g Hectorit, 900 g Quarzsand 0,1-0,4 (erhältlich bei der Amberger Kaolinwerke GmbH), 600 g Calcit, 300 g Hochofenzement HOZ 35L (erhältlich bei Südbayer. Portlandzementwerk) mit 18 g einer 45 %igen wässrigen Lösung von Propylsiliconat, käuflich erhältlich unter der Bezeichnung BS 20 bei der Fa. Wacker-Chemie GmbH in München, vermischt.

Beispiel 2: Prüfung der Dichtmassen auf Schadstoffresistenz

Die in Beispiel 1 und Vergleichsbeispiel 1 hergestellten Dichtmassen wurden in runde Probeformen gegossen. Sie wurden nach 96 h Klimatisierung bei 23 °C und 50% rel. Feuchte entschalt.

Die Schadstoffresistenz wurde mit einer in Fig. 1 dargestellten Anordnung bestimmt. Auf den Prüfkörper wurde ein Karstenprüfrohr aufgeklebt und der Testkörper horizontal in feuchten Sand eingebettet. Das Prüfrohr wurde auf 125 mm Flüssigkeitssäule aufgefüllt (Scaleneinteilung 0). Das Absinken des Flüssigkeitsstandes wurde in Abständen von 240 min registriert. Der Flüssigkeitsstand wurde jeweils bis auf die Scaleneinteilung 0 aufgefüllt. Die jeweils nach 7 Tagen durchgelaufene Flüssigkeitsmenge ist in Tab. 2 aufgeführt. Der Versuch wurde mit den in Tab.1 aufgeführten Flüssigkeiten durchgeführt. Die jeweils durchgelaufene Flüssigkeitsmenge ist proportional der Durchlässigkeit des jeweiligen Prüfkörpers für diese Flüssigkeit.

Tab.1

| Verwendete Flüssigkeiten | |
|---|---|
| Wasser<br>TCE/Wasser | Trinkwasserqualität<br>0,1% Trichlorethylen in Trinkwasser |
| Phenolwasser | 5 Gew.% Phenol<br>95 Gew.% Trinkwasser |
| LM-Gemisch | 20 Gew.% Toluol<br>20 Gew.% Xylol<br>20 Gew.% Ethanol<br>20 Gew.% Isopropanol<br>20 Gew.% Aceton |
| Diesel<br>Säure<br>Lauge | PKW-Dieselkraftstoff-Qualität<br>0,49%ige Schwefelsäure (0,1 n)<br>0,56%ige Kalilauge (0,1 n) |

Tab.2: Zusammenfassung der Versuchsergebnisse:

| Dichtmasse aus | Wasser | LM-Gemisch | Phenol-wasser | Diesel | Wasser/TCE | Säure | Lauge |
|---|---|---|---|---|---|---|---|
| B 1 a | 1,2 | 20,7 | 1,7 | 8,5 | 1,5 | 1,2 | 1,0 |
| V 1 a | 47,3 | 126,8 | 56,0 | 28,5 | 48,0 | 10,4 | 86,2 |
| V 1 d | 3,0 | 175,0 | 1,8 | 31,9 | 2,2 | 1,35 | 2,1 |
| B 1 b | 1,3 | 8,6 | 2,1 | 2,2 | - | 0,95 | 1,0 |
| V 1 b | 29,1 | 99,8 | 64,3 | 27,9 | - | 69,9 | 102,4 |
| V 1 e | 2,1 | 175,0 | 2,1 | 46,6 | - | 1,65 | 16,8 |
| B 1 c | 1,8 | 77,8 | 1,8 | 41,8 | - | 1,4 | 1,1 |
| V 1 c | 16,0 | 104,5 | 23,2 | 31,8 | - | 4,5 | 12,0 |
| V 1 f | 1,9 | 175,0 | 12,6 | 32,3 | - | 1,25 | 1,7 |
| V 1 g | 17,3 | - | - | - | 11,2 | - | - |
| V 1 h | 16,8 | - | - | - | 15,5 | - | - |
| V 1 i | 6,6 | - - | - | - | 8,7 | - | - |
| V 1 k | 12,0 | - - | - | - | 10,4 | - | - |

## Patentansprüche

1. Schadstoffresistente organopolysiloxanhaltige Masse zur Herstellung von Dichtwänden, Deponieauskleidungen und ähnlichen insbesondere im Erdreich angelegten Abdichtungen dadurch gekennzeichnet,

daß sie

(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,
(B) Organosiliciumverbindung mit basischem Stickstoff in Mengen von 0 bis 0,5 Gewichtsprozent, bezogen auf das Gewicht dieser Organosiliciumverbindung,
(C) quellfähige Tonmineralien und
(D) hydraulisches Bindemittel, enthält.

**2.** Schadstoffresistente organopolysiloxanhaltige Masse zur Herstellung von Dichtwänden, Deponieauskleidungen und ähnlichen, insbesondere im Erdreich angelegten Abdichtungen dadurch gekennzeichnet, daß sie

(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,
(B) Organosiliciumverbindung mit basischem Stickstoff in Mengen von 0 bis 0,5 Gewichtsprozent, bezogen auf das Gewicht dieser Organosiliciumverbindung,
(C) quellfähige Tonmineralien
(D) hydraulisches Bindemittel
(E) Betonzusatzmittel und
(F) Füllstoffe enthält.

**3.** Verwendung der schadstoffresistenten organopolysiloxanhaltigen Masse gemäß Anspruch 1 oder 2 zur Herstellung von Dichtwänden, Deponieauskleidungen und ähnlichen insbesondere im Erdreich angelegten Abdichtungen.

## Claims

**1.** Pollutant-resistant organopolysiloxane-containing composition for producing impermeable walls, landfill linings and similar seals, particularly those set into the earth, characterized in that it comprises

(A) salt of organic or inorganic acid and organopolysiloxane which has SiC-attached radicals containing basic nitrogen in amounts of at least 0.5 per cent by weight of basic nitrogen, based on the weight of this organopolysiloxane,
(B) organosilicon compound containing basic nitrogen in amounts of from 0 to 0.5 per cent by weight, based on the weight of this organosilicon compound,
(C) swellable clay minerals and
(D) hydraulic binder.

**2.** Pollutant-resistant organopolysiloxane-containing composition for producing impermeable walls, landfill linings and similar seals, particularly those set into the earth, characterized in that it comprises

(A) salt of organic or inorganic acid and organopolysiloxane which has SiC-attached radicals containing basic nitrogen in amounts of at least 0.5 per cent by weight of basic nitrogen, based on the weight of this organopolysiloxane,
(B) organosilicon compound containing basic nitrogen in amounts of from 0 to 0.5 per cent by weight, based on the weight of this organosilicon compound,
(C) swellable clay minerals
(D) hydraulic binder
(E) concrete additives and
(F) fillers.

**3.** Use of the pollutant-resistant organopolysiloxane-containing composition according to Claim 1 or 2 for producing impermeable walls, landfill linings and similar seals, particularly those set into the earth.

## Revendications

**1.** Masse contenant des organopolysiloxanes résistant aux matières polluantes pour la préparation de parois étanches, de garnissage de dépôts et d'autres installations étanches posées dans le sol, caractérisée en ce qu'elle contient

(A) un sel d'acide organique ou minéral et d'organopolysiloxane, qui présente des radicaux liés à SiC comportant l'azote basique à raison d'au moins 0,5 % en poids d'azote basique par rapport au poids total de cet organopolysiloxane,
(B) un composé organosilicié comportant l'azote basique à raison de 0 à 0,5 % en poids, par rapport au poids total de ce composé organosilicié,
(C) des minéraux argileux susceptibles de gonfler et
(D) un liant hydraulique.

**2.** Masse contenant des organopolysiloxanes résistant aux matières polluantes pour la préparation de parois étanches, de garnissages de décharges et notamment d'autres installations étanches posées dans le sol, caractérisée en ce qu'elle contient
(A) un sel d'acide organique ou minéral et d'organopolysiloxane, qui présente des radicaux liés à SiC comportant l'azote basique à raison d'au moins 0,5 % en poids d'azote basique par rapport au poids de cet organopolysiloxane,
(B) un composé organosilicié comportant l'azote basique à raison de 0 à 0,5 % en poids, par rapport au poids de ce composé organosilicié,
(C) des minéraux argileux susceptibles de gonfler,
(D) un liant hydraulique,
(E) un additif de béton et
(F) une charge.

**3.** Utilisation des masses contenant des organopolysiloxanes résistant aux matières polluantes selon la revendication 1 ou 2 pour la préparation de parois étanches, de garnissages de décharges et plus particulièrement d'autres installations étanches posées dans le sol.

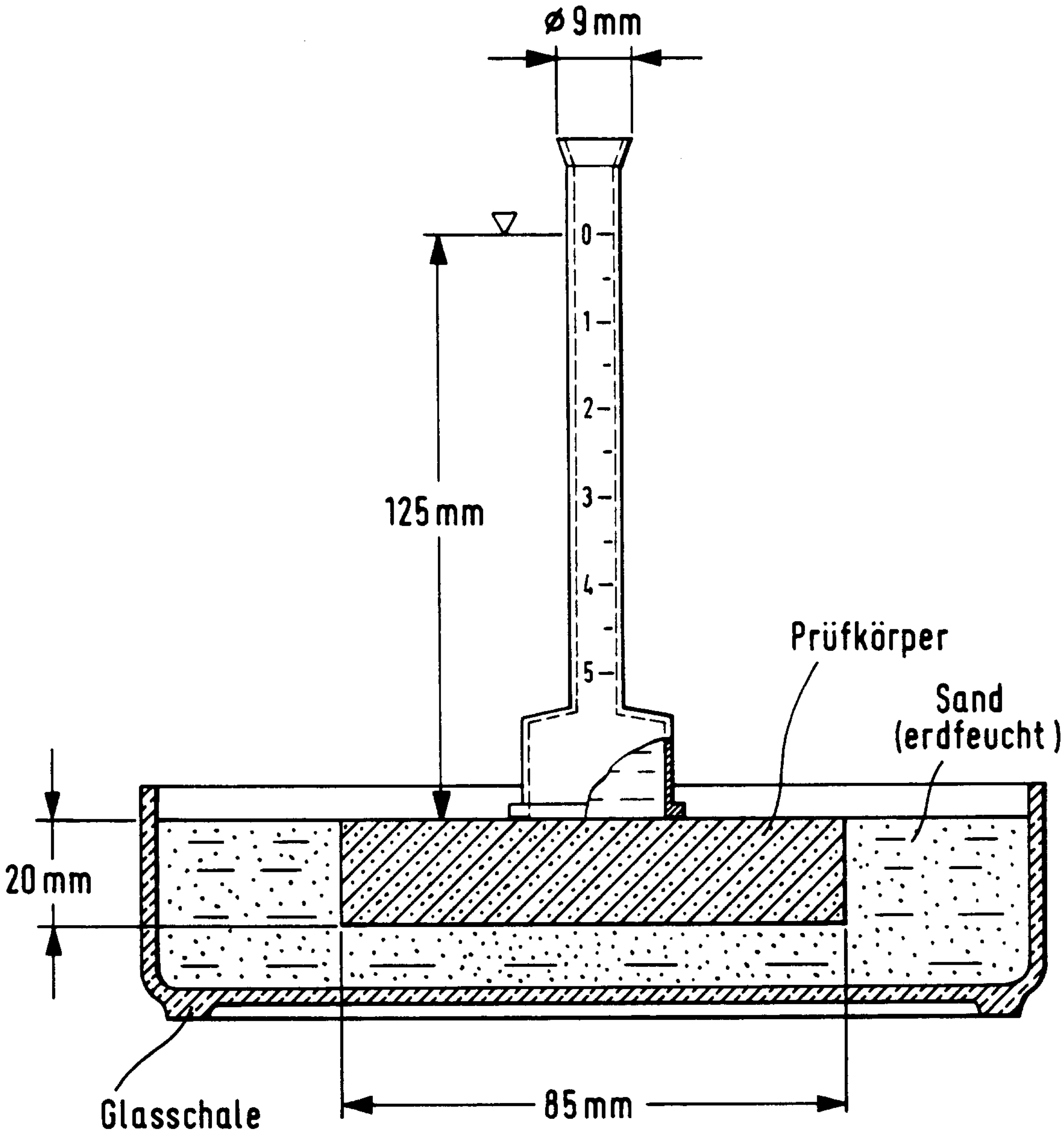
ø 9mm
0
1
2
3
4
5
125 mm
Prüfkörper
Sand
(erdfeucht)
20 mm
Glasschale
85 mm

Fig. 1